**Europäisches Patentamt**

(19) **European Patent Office**

**Office européen des brevets**

(11) Publication number : **0 380 293 B1**

# (12) EUROPEAN PATENT SPECIFICATION

(45) Date of publication of patent specification :
**22.09.93 Bulletin 93/38**

(51) Int. Cl.⁵ : **A23L 1/24**

(21) Application number : **90300686.4**

(22) Date of filing : **23.01.90**

(54) **Cholesterol-free salad dressing.**

(30) Priority : **25.01.89 US 302163**

(43) Date of publication of application :
**01.08.90 Bulletin 90/31**

(45) Publication of the grant of the patent :
**22.09.93 Bulletin 93/38**

(84) Designated Contracting States :
**AT BE CH DE DK ES FR GB GR IT LI NL SE**

(56) References cited :
**EP-A- 0 129 346**
**FR-A- 2 302 051**
**GB-A- 2 056 840**
**US-A- 3 764 347**
**US-A- 3 892 873**

(73) Proprietor : **CPC INTERNATIONAL INC.**
**International Plaza P.O. Box 8000**
**Englewood Cliffs New Jersey 07632 (US)**

(72) Inventor : **Meiners, Mary D.**
**Five Prospect Place**
**Springfield, New Jersey 07081 (US)**

(74) Representative : **Wilkinson, Stephen John et al**
**Stevens, Hewlett & Perkins 1 St. Augustine's**
**Place**
**Bristol BS1 4UD (GB)**

## Description

### 1. TECHNICAL FIELD

The present invention relates to a salad dressing of the mayonnaise type which is free of cholesterol and which exhibits excellent texture stability and mouthfeel.

### 2. DESCRIPTION OF RELATED ART

Salad dressings are well known consumer products which are available in many forms, but are usually divided into two broad categories - spoonable or pourable dressings. The salad dressing of the present invention is of the mayonnaise type and therefore fits into the spoonable category. More specifically, it is an emulsified, semi-solid food product. The present invention differs from the majority of salad dressings and mayonnaises currently available to the consumer since it is a cholesterol-free product which exhibits excellent texture stability and mouthfeel and is stable over substantial periods of time; even at elevated temperatures.

Standard salad dressings or mayonnaise products are semi-solid oil in water emulsions which contain acid, egg and flavorants. The egg is usually the major emulsifying agent, but may be used in conjunction with an additional emulsifying agent such as a natural plant hydrocolloid or a gum. Although egg, and particularly egg yolk, have been the most widely used emulsifiers in salad dressings and mayonnaise products other emulsifiers have been taught as substitutes for whole eggs or egg yolks.

In U.S. patent no. 4,302,474, Mikami et al. prepared mayonnaise-like foods by replacing the eggs with a refined soybean protein. The molecular structure of the protein was converted to a water-insoluble form by washing the protein with alcohols. The resultant mayonnaise-like product exhibited good squeezing properties, ie: it exhibited a moderate softness and form maintaining property when extruded from a plastic tube.

Kolen et al. disclosed in U.S. patent no. 3,892,873 that the serum protein obtained from milk was an effective emulsifying agent in emulsified oil dressings having a pH in the range of from about 3.0 to about 4.5. The serum protein was treated so that a predetermined level of the protein was denatured. The level of serum protein required to effect emulsification varied in the oil dressings, with the level of serum protein decreasing as the oil level was increased.

Katz, in U.S. patent no. 3,764,347, disclosed and claimed a no-cholesterol salad dressing of the mayonnaise type which contained starch, egg white, vegetable oil and optionally an emulsifier and a chelating agent. In order to make a no-cholesterol product, Katz incorporated 1 to 12 parts by weight, preferably 3 to 9 parts by weight of egg white in place of egg yolk as the main emulsifier.

It has been discovered that when large amounts of protein are used, such as the 3 to 9 parts by weight preferred by Katz, the resulting products exhibit poor texture or texture instability over time, and the product is stiff and texturally resembles a cooked egg white. The measurable changes in the product texture are a result of excess soluble protein, protein which is not bound up in the emulsification and interstructure of the salad dressing product. The excess soluble protein undergoes gelation or denaturation during storage, particularly at ambient or elevated temperatures.

### SUMMARY OF THE INVENTION

The present invention provides a salad dressing of the mayonnaise type which is cholesterol-free and has improved textural stability. The amount of soluble protein in the product must be kept within a specified range, thereby limiting the amount of excess soluble protein which would be available to denature and coagulate over time. The present salad dressing has been found to maintain a desirable product texture over extended periods of time; even at elevated temperatures.

### DETAILED DESCRIPTION

The present invention provides an improved cholesterol-free salad dressing of the mayonnaise type which contains oil, water, starch, flavorants and a protein source. The soluble protein portion of the protein source must be present within strictly defined parameters. The acceptable range for the soluble protein, recovered from the product by the procedure set forth below, is from about 0.6 to about 1.0 milligrams soluble protein per gram of product (mg/g). The protein source used in the product may be in the form of egg white, whey protein, whey protein concentrate or combinations thereof. The protein source is the sole emulsifier. There is no need to add additional emulsifying agents to ensure a stable emulsion. If desired, the texture of the product may be modified by the use of hydrocolliods or gums.

2

By limiting the amount of the protein source available in the product, the excess soluble protein is also limited. Excess soluble protein is the protein which is not bound up in the emulsification and interstructure of the salad dressing product. The amount of soluble protein available in the salad dressing product is a relative measurement and the following procedure is provided to determine the value for information purposes.

Twenty (20) gram samples of the cholesterol-free salad dressing were weighed in a 250 ml flask, to which forty (40) grams of a 2.5% sodium chloride solution were added and the mixture was shaken. A sample of the mixture was then placed in a centrifuge at 25,000 rpm for 60 minutes and the middle aqueous stage was recovered. The protein was precipitated from the aqueous stage by addition of trichloroacetic acid (TCA). The precipitated protein was recovered and was then suspended in a sodium dodecyl sulfate (SDS) reagent for analysis. A suitable aliquot, usually 0.1 ml, was analyzed by the Pierce BCA method, which is well known to those skilled in the art.

It was found by the above identified procedure, that a soluble protein level of from 12 mg soluble protein/g aliquot to 20 mg soluble protein/g aliquot, which corresponds to from 0.6 to 1.0 mg/g of product, produces a product with excellent emulsion and textural stability.

The present cholesterol-free salad dressing of the mayonnaise type can be formulated at various desired calorie levels by varying the oil content. The overall formulation for the product, in weight percent, is from 25 to 40% oil, from 50 to 60% starch paste, from 0 to 10% water and from 1.0 to 4.0% protein source. A preferred range for the protein source in the product will vary depending on the source. For example, lower amounts will be required when whey protein concentrate is the protein source.

As pointed out above, the excess soluble protein, is that protein which is not bound up in emulsification and interstructure of the mayonnaise and which causes the changes in the product structure and textural stability. Specifically, soluble protein that is not bound will denature and coagulate or gel over time. The coagulation of the protein is effected by the storage temperature. Higher temperatures accelerate the coagulation and product firming, while lower temperature retard the firming process.

It has been found that by reducing the quantity of excess soluble protein the amount of coagulable protein is reduced, thus minimizing textural changes. Texture evaluations are conducted by means of an electric plummet, a test well known to those skilled in the art. Salad dressings of the mayonnaise type should exhibit electric plummet values of from about 2.7 to about 3.9, and should remain in that range over time at varied temperatures.

Reduction of the quantity of soluble protein must be optimized. If the level of soluble protein is reduced to a quantity that is too low, a point is reached where the emulsion stability is greatly sacrificed. This is caused by the reduction of the total protein as well as the soluble protein. It has been found that at a soluble protein level of less than 0.3 mg/g of product, a stable textural character was maintained over an extended temperature range, but the emulsion did not do well in a freeze break analysis, a routine test for emulsion stability. After storing the product for 24 hours at -9.44°C (15°F), during freeze break tests followed by defrosting at ambient temperatures, there were indications of oil separation and streaking.

The present invention overcomes the limitations of prior salad dressing products by producing a texture-stable, emulsified, semi-solid salad dressing which is cholesterol-free.

The following examples are illustrative of the present invention and are not intended as a limitation on the scope thereof. All percentages set forth in the examples are by weight.

## EXAMPLE I

### (Percent)

| Formula | IA | IB | IC | ID |
|---|---|---|---|---|
| Egg White | 4.43 | 2.22 | 1.11 | 0.56 |
| Oil | 32.50 | 32.50 | 32.50 | 32.50 |
| Flavorant | 7.07 | 7.07 | 7.07 | 7.07 |
| Water | -- | 2.21 | 3.32 | 3.87 |
| Acidified Starch | | | | |
| Paste | 56.00 | 56.00 | 56.00 | 56.00 |
| Total | 100.00 | 100.00 | 100.00 | 100.00 |

3

The formulas were prepared by adding the egg white, oil and spice mixture to the correct quantity of acidified starch paste, and mixing for four (4) minutes. Thereafter, a continuous mixing process can be used. The mixture is pumped through a colloid mill to improve the emulsion stability and product texture.

Texture evaluations, by means of an electric plummet, are run immediately after milling, and again at 24 hours, to confirm the development of a mayonnaise like body. Thereafter, only slight changes should occur in the product texture.

A sample was taken of each formula, after it sat for forty-eight hours, to determine the amount of soluble protein. The texture evaluation procedure set forth above was followed.

### TABLE I - FORMULA IA
### PRODUCT PLUMMET VS. TIME
### SOLUBLE PROTEIN LEVEL 2 mg/g PRODUCT

| Time | Temperature | | |
|---|---|---|---|
| (days) | 7.22°C (45°F) | 23.9°C (75°F) | 35°C (95°F) |
| 0 | 4.15 | 4.15 | 4.15 |
| 1 | 3.28 | 3.28 | 3.28 |
| 10 | 3.23 | 3.03 | 2.75 |
| 17 | 3.25 | 2.98 | 2.60 |
| 31 | 2.90 | 2.60 | 2.20 |
| 60 | 3.05 | 2.68 | 2.0 |

Freeze Break Test - Acceptable
Firming Over Time Test - Unacceptable

### TABLE II - FORMULA IB
### PRODUCT PLUMMET VS. TIME
### SOLUBLE PROTEIN LEVEL OF 0.9 mg/g PRODUCT

| Time | Temperature | | |
|---|---|---|---|
| (days) | 7.22°C (45°F) | 23.9°C (75°F) | 35°C (95°F) |
| 0 | 4.55 | 4.55 | 4.55 |
| 1 | 3.80 | 3.80 | 3.80 |
| 10 | 3.68 | 3.65 | 3.18 |
| 17 | 3.80 | 3.55 | 3.15 |
| 31 | 3.73 | 3.50 | 3.10 |
| 60 | 3.80 | 3.38 | 2.92 |

Freeze Break Test - Acceptable
Firming Over Time Test - Acceptable

TABLE III - FORMULA IC
PRODUCT PLUMMET VS. TIME
SOLUBLE PROTEIN LEVEL OF 0.3 mg/g PRODUCT

| Time (days) | Temperature | | |
|---|---|---|---|
| | 7.22°C (45°F) | 23.9°C (75°F) | 35°C (95°F) |
| 0 | 4.58 | 4.58 | 4.58 |
| 1 | 3.9 | 3.9 | 3.9 |
| 10 | 3.85 | 3.88 | 3.6 |
| 17 | 3.95 | 3.95 | 3.68 |
| 31 | 3.80 | 3.83 | 3.50 |
| 60 | 3.95 | 3.70 | 3.37 |

Freeze Break Test - Unacceptable
Firming Over Time Test - Unacceptable

TABLE IV - FORMULA ID
PRODUCT PLUMMET VS. TIME
SOLUBLE PROTEIN LEVEL OF 0.07 mg/g PRODUCT

| Time (days) | Temperature | | |
|---|---|---|---|
| | 7.22°C (45°F) | 23.9°C (75°F) | 35°C (95°F) |
| 0 | 5.08 | 5.08 | 5.08 |
| 1 | 4.40 | 4.40 | 4.40 |
| 10 | 4.45 | 4.33 | 4.25 |
| 17 | 4.20 | 4.20 | 4.10 |
| 31 | 4.35 | 4.18 | 4.00 |
| 60 | 4.1 | -- | 3.90 |

Freeze Break Test - Unacceptable
Firming Over Time Test- Unacceptable

EXAMPLE II

| Formula | |
|---|---|
| Egg White | 1.11 |
| Whey | 1.11 |
| Oil | 32.50 |
| Flavorant | 7.07 |
| Water | 2.21 |
| Acidified Starch Paste | 56.00 |
| | 100.00 |

The same procedure was followed as set forth in Example 1, except that one half of the protein was supplied by egg white and one half by whey protein. The following table illustrates that the combination of protein will also result in an acceptable product over time.

TABLE V
PRODUCT PLUMMET VS. TIME
SOLUBLE PROTEIN LEVEL 0.6 mg/g PRODUCT

| Time (days) | Temperature 23.9°C (75°F) |
|---|---|
| 0 | 5.00 |
| 1 | 4.25 |
| 14 | 3.50 |
| 21 | 3.60 |
| 30 | 3.70 |

Freeze Break Test - Acceptable
Firming Over Time Test - Acceptable

## Claims

1. A cholesterol-free salad dressing of the mayonnaise type comprising starch paste, oil and a protein source characterised in that the salad dressing comprises from 40 to 60% starch paste, from 25 to 40% oil and from 1 to 4% protein source wherein the amount of soluble protein not bound up in the emulsification and interstructure of the dressing is in the range of from 0.6 to 1.0 mg per gram of the salad dressing.

2. A cholesterol-free salad dressing as claimed in claim 1, wherein the protein source is selected from the group consisting of egg white, whey protein, whey protein concentrates and combinations thereof.

3. A cholesterol-free salad dressing as claimed in claim 1, wherein the protein source is egg white.

4. A cholesterol-free salad dressing as claimed in claims 1 to 3, wherein the salad dressing comprises from 0 to 10% water.

## Patentansprüche

1. Cholesterinfreie Salatsauce vom Mayonnaisetyp, umfassend Stärkepaste, Öl und eine Proteinquelle, **dadurch gekennzeichnet,** daß die Salatsauce 40 bis 60 % Stärkepaste, 25 bis 40 % Öl und 1 bis 4 % einer Proteinquelle umfaßt, wobei die Menge an löslichem Protein, das nicht bei der Emulgation und Zwischenstruktur von der Sauce eingebunden wird, im Bereich von 0,6 bis 1,0 mg pro Gramm Salatsauce liegt.

2. Cholesterinfreie Salatsauce gemäß Anspruch 1, wobei die Proteinquelle ausgewählt ist aus der Gruppe, bestehend aus Eiklar, Molkeprotein, Molkeproteinkonzentraten und Kombinationen davon.

3. Cholesterinfreie Salatsauce gemäß Anspruch 1, wobei die Proteinquelle Eiklar ist.

4. Cholesterinfreie Salatsauce gemäß Anspruch 1 bis 3, wobei die Salatsauce 0 bis 10 % Wasser umfaßt.

## Revendications

1. Assaisonnement pour salade dépourvu de cholestérol, du type mayonnaise, comprenant une pâte d'amidon, de l'huile et une source de protéine, caractérisé en ce qu'il comprend 40 à 60 %'de pâte d'amidon, 25 à 40 % d'huile et 1 à 4 % de source de protéine, la quantité de protéine soluble non liée dans l'émulsionnement et la structure interne de l'assaisonnement étant comprise dans l'intervalle de 0,6 à 1,0 mg par gramme de l'assaisonnement pour salade.

2. Assaisonnement pour salade, dépourvu de cholestérol, suivant la revendication 1, dans lequel la source de protéine est choisie dans le groupe consistant en blanc d'oeuf, protéine du petit-lait, concentrés de protéine du petit-lait et leurs mélanges.

3. Assaisonnement pour salade, dépourvu de cholestérol, suivant la revendication 1, dans lequel la source de protéine consiste en blanc d'oeuf.

4. Assaisonnement pour salade, dépourvu de cholestérol, suivant les revendications 1 à 3, qui comprend 0 à 10 % d'eau.